# EUROPÄISCHE PATENTANMELDUNG

(11) **EP 0 877 235 A2**
(43) Veröffentlichungstag der Anmeldung: **11.11.1998**
(21) Anmeldenummer: 98101026.7
(22) Anmeldetag: 22.01.1998
(51) Int. Cl.: G01G 11/00, G01G 13/00

(54) **Vorrichtung zum Bestimmen der Masse eines Produktes**

(30) Priorität: 09.05.1997 DE 19719600; 09.05.1997 DE 19719597
(71) Anmelder: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(57) **Zusammenfassung**

Bei einer Vorrichtung (1) zum Bestimmung einer Masse werden zwei Lösungen vorgeschlagen. Bei einer Masse aufnehmenden Einrichtung (4), einem die Einrichtung (4) fixierenden Träger (5) und einer die Einrichtung (4) und den Träger (5) wägenden Meßeinrichtung (8) bestehen die Einrichtung (4) und der Träger (5) aus einer Magnesiumlegierung (6), z.B. Mg Al9 Zn1 (9). Die Vorrichtung (1) kann als Schneckenwaage (17) mit einer Dosierschnecke (19) ausgestaltet sein.

Infolge der geringen Dichte und hohen Steifigkeit der Magnesiumlegierung (6) können Einrichtung (4) und Träger (5) extrem leicht ausgestaltet werden, wodurch eine hohe Wägegenauigkeit erreicht wird. Die Magnesiumlegierung (6) ist abriebssicher und verhindert wegen ihrer sehr hohen elektrischen Leitfähigkeit eine Entwicklung störender Ladungen bei einer elektrisch leicht aufladbaren Produktmasse 23, z.B. Sojamehl.

Bei einer zweiten Lösung, bei der die Vorrichtung (101) zum volumetrischen Dosieren eines fließfähigen Produkts dient, wird das Produkt mittels eines beweglichen Teils (102) dosiert und aus einem Vorratsbehälter (103) ausgetragen. Das bewegliche Teil (2) besteht aus einer Magnesiumlegierung (104), z.B. Mg Al9 Zn1 (114). Eine derartige Vorrichtung (101) eignet sich für einen extrem schnellen Dosierbetrieb.

## Beschreibung

Die Erfindung betrifft zum einen eine Vorrichtung zum Bestimmen der Masse eines Produkts, mit einer Masse aufnehmenden Einrichtung, einem die Einrichtung fixierenden Träger, und einer die Masse, die Einrichtung und den Träger wägenden Meßeinrichtung.

Zum anderen betrifft die Erfindung eine Vorrichtung zum Bestimmen der Masse eines Produkts, mit einem beweglichen, das Produkt dosierendem Teil, wobei das Produkt vom beweglichen Teil aus einem Vorratsbehälter ausgetragen wird, und ein Antrieb das bewegliche Teil antreibt.

Bekannte Vorrichtungen der ersten Art weisen in der Regel eine Einrichtung und einen Träger aus rostfreiem Edelstahl auf. Edelstahl als Vorrichtungsmaterial erfüllt die Anforderungen, wonach das Vorrichtungsmaterial eine relativ hohe Steifigkeit und Härte haben muß, keinen Abrieb produzieren darf, gut reinigbar sein muß, und auch von chemisch aktiven, zu wägenden Massen nicht angegriffen werden darf.

Die bekannten Vorrichtungen haben den Nachteil, daß infolge der relativ hohen Dichte des Stahls von 6,3 bis 8,1 kg/dm³ die Masse der Einrichtung und des Trägers relativ hoch, und damit die Genauigkeit der Massenbestimmung relativ niedrig ist.

Geringere Einrichtungsmassen und Trägermassen wären zwar bei Einsatz von Aluminium oder Kunststoff möglich. Aluminium hat aber zum Erreichen einer sehr hohen Genauigkeit noch eine zu hohe Dichte, und Kunststoffe haben den Nachteil, daß sie sich elektrostatisch aufladen können, und dadurch elektrische Meßeinrichtungen stören, sowie zu einer erhöhten Anhaftung des zu wägenden Produkts an der Einrichtung führen können.

Bekannte Vorrichtungen der zweiten Art sind als Becherdosiervorrichtungen und als Schneckendosiervorrichtungen ausgestaltet. Ihr bewegliches Teil besteht aus rostfreiem Edelstahl, um eine Wechselwirkung zwischen dem Teil und dem Produkt sowie einen Abrieb auszuschließen.

Die bekannten Vorrichtungen haben den Nachteil, daß sie für extrem hohe Dosiergeschwindigkeiten wenig geeignet sind, da ihr bewegliches Teil ein relativ hohes Massenträgheitsmoment hat.

Das im Maschinenbau gebräuchliche Aluminium hat zwar ein im Vergleich zu Stahl deutlich verringertes Massenträgheitsmoment, dieses ist aber für extrem hohe Dosiergeschwindigkeiten noch zu groß. Ein zu großes Massenträgheitsmoment würde einen sehr großen, leistungsstarken Antrieb erfordern, was relativ kostenintensiv wäre.

Kunststoffe hätten ein noch geringeres Massenträgheitsmoment als Aluminium, scheiden aber wegen ihres zu geringen Elastizitätsmoduls oder ihrer geringen Härte aus. Zudem haben Kunststoffe im allgemeinen den Nachteil, daß sie bei den gewünschten, hohen Dosiergenauigkeiten einen Abrieb erzeugen, der im Lebensmittelbereich nicht zulässig ist.

Der Erfindung liegt die Aufgabe zu Grunde, die Genauigkeit einer Vorrichtung zum Bestimmen einer Masse deutlich zu erhöhen. Dabei dürfen verwendete Materialien der Vorrichtung keinen Abrieb produzieren und keine elektro- statischen Aufladungen erzeugen. Auch soll die Vorrichtung für extrem hohe Massenbestimmungsgeschwindigkeiten geeignet sein.

Gelöst ist die Aufgabe gemäß den kennzeichnenden Teilen der Ansprüche 1 und 8.

Die erfindungsgemäße Vorrichtung gemäß Anspruch 1 hat den Vorteil, daß die Genauigkeit der Vorrichtung bei einer gravimetrischen Massenbestimmung deutlich erhöht ist, da die Masse der Einrichtung und des Trägers im Vergleich zu diesen Teilen aus Stahl deutlich reduziert ist. Die Magnesiumlegierung hat lediglich eine Dichte von 1,7 kg/dm³. Die Magnesiumlegierung verursacht bei ihrem Einsatz infolge ihrer relativ hohen Brinellhärte (HB) von 200 bis 300 keinen Abrieb. Wegen ihrer ausgezeichneten elektrischen Leitfähigkeit kommen elektrostatische Aufladungen nicht vor. Auf Grund ihres Elastizitätsmoduls von 4,4 · 10¹⁰ N/m² ist die Magnesiumlegierung so steif, daß der Materialeinsatz minimiert werden kann, und daß die Kraftaufnahme weiter verringert und die Wägegenauigkeit weiter erhöht werden kann. Ein bewegtes Teil aus der Magnesiumlegierung kann zudem infolge seines geringen Massenträgheitsmoments sehr schnell ausgelenkt und wieder beruhigt werden, was die Wägezeit deutlich verringert.

Die Magnesiumlegierung ist relativ leicht und somit sind das Massenträgheitsmoment und die Beschleunigungskräfte bei einer Vorrichtung entsprechend Anspruch 8 deutlich verringert. Die Dichte der Magnesiumlegierung ist mit ca. 1,7 kg/dm³ deutlich niedriger als die von Stahl mit 6,3 bis 8,1 kg/dm³, wodurch auch relativ großvolumige Vorrichtungen zum volumetrischen Dosieren relativ schnell und mit vergleichsweise geringer Antriebsleistung beschleunigt werden können. Dies ist für Höchstleistungsdosiervorrichtungen auch insofern ein Vorteil, als durch die Verringerung der Beschleunigungskräfte die Antriebsmechanik einfacher und die Vorrichtung kostengünstiger wird.

Das Elastizitätsmodul der Magnesiumlegierung beträgt 4,4 · 10¹⁰ N/m² und ist für extrem hohe Dosiergeschwindigkeiten ausreichend. Mit einer Brinellhärte (HB) von 200 bis 300 ist die Magnesiumlegierung relativ hart. Je nachdem, was für ein Produkt dosiert werden soll, kann die Magnesiumlegierung mit einer Beschichtung versehen werden. Der Abrieb der Magnesiumlegierung ist sehr gering.

Weitere, vorteilhafte Ausgestaltungen der erfindungsgemäßen Vorrichtungen sind in den Ansprüchen 2 bis 7 und 9 bis 21 beschrieben.

Ist die Vorrichtung eine mit einer Wägeschale ausgestattete Waage, und ist als Meßeinrichtung eine Wägezelle vorgesehen (Anspruch 2), so ist in einfacher Weise eine erfindungsgemäße Vorrichtung realisiert, und das Meßergebnis kann von der Wägezelle direkt einer Auswerteelektronik zugeführt werden.

Eine Masse, z.B. ein befüllter Beutel, kann während ihres Transports gewogen werden wenn gemäß Anspruch 3 die Vorrichtung eine Bandwaage ist, bei der ein geschlossenes Band als Zusatz zur Einrichtung um zwei Rollen umläuft, wobei eine Rolle oder das Band mittels eines Antriebs angetrieben ist, und als Meßeinrichtung eine Wägezelle vorgesehen ist. Das Band dient dem Transport- und dem Wägezweck. Infolge des Einsatzes der Magnesiumlegierung kann das Transportband kürzer ausgestaltet und schneller betrieben werden als bei herkömmlichen Bandwaagen.

Ist die Vorrichtung eine Schneckenwaage mit einer in einem Schneckenrohr angeordneten Dosierschnecke, mit einem Vorratsbehälter als Einrichtung und als Träger, sowie mit mindestens einer Wägezelle als Meßeinrichtung, wobei der Vortatsbehälter, die Dosierschnecke, das Schneckenrohr und ein Antrieb für die Dosierschnecke die Meßeinrichtung belasten (Anspruch 4), so kann bei einer Volumendoiserung eine genaue Wägung der gespendeten Masse während des Spendevorgangs erfolgen. Der Spendevorgang kann infolge geringen Trägheitsmoments der Dosierschnecke sehr schnell erfolgen, und durch den Einsatz eines elektromagnetischen Linearantriebs als Antrieb für die Dosierschnecke noch schneller erfolgen. Ein elektromagnetischer Linearantrieb (Linearmotor) kann Beschleunigungen bis zum Zwanzigfachen der Erdbeschleunigung realisieren und kann ein abzubremsendes Aggregat sehr ortsgenau anhalten. Je schneller eine Dosierschnecke betrieben wird, um so kleiner und damit wägegenauer kann sie ausgestaltet werden. Mit dem Einsatz eines Linearmotors bei der beschriebenen Schneckenwaage kann die Dosiergenauigkeit erhöht, die Dosiergenauigkeit verbessert und die Wägung schneller und genauer erfolgen als bei bekannten Schneckenwaagen. Infolge des geringen Massenträgheitsmoments der Dosierschnecke kann ein relativ leistungsschwacher Linearmotor eingesetzt werden, der leicht ist, und der deshalb die Wägegenauigkeit der Schneckenwaage weiter verbessert.

Wird die Meßeinrichtung zusätzlich von einem Rührwerk und einem Antrieb für das Rührwerk belastet (Anspruch 5), so wird der Einfluß des Rührwerks auf die insgesamt im Vorratsbehälter und im Schneckenrohr befindliche Produktmasse von der Meßeinrichtung erfasst und bei der Bestimmung der durch das Schneckenrohr gespendeten Produktportion berücksichtigt. Das Rührwerk dient einer Homogenisierung der Produktmasse, so daß Dichteschwankungen in der Produktmasse reduziert und die Dosiergenauigkeit weiter verbessert wird.

Als Magnesiumlegierung eignen sich sowohl Mg Ag3 Se2 Zr1 (Anspruch 6) als auch Mg Al9 Zn1 oder Mg Al8 Zn1 (Anspruch 6, Anspruch 14, Anspruch 15). Mg Ag3 Se2 Zr1 enthält 3% Silber, 2% Selen und 1% Zirkonium und wird auch als MSR-Legierung bezeichnet. Mg Al9 Zn1 enthält 9% Aluminium und 1% Zink, Mg Al8 Zn1 enthält 8% Aluminium und 1% Zink. Beide Legierungen erfüllen sehr gut alle zuvor beschriebenen Eigenschaften einer Magnesiumlegierung und sind gut verfügbar.

Die Herstellung eines Trägers oder einer Einrichtung aus einer Magnesiumlegierung erfolgt in kostengünstiger Weise als Gußteil (Anspruch 7).

Ist die Magnesiumlegierung mit einer chemisch inerten Beschichtung versehen (Anspruch 17), so ist ein Schutz der Magnesiumlegierung gegenüber chemisch aktiven insbesondere sauren Produkten erreicht und umgekehrt. Ein zuverlässiger Schutz ist erreicht, wenn die Magnesiumlegierung eloxiert ist (Anspruch 18).

Ist die Magnesiumlegierung mit einer antiadhäsiven Beschichtung versehen (Anspruch 19), so wird ein Anhatten des Produkts an der Magnesiumlegierung unwahrscheinlicher, die Wägegenauigkeit bzw. Dosiergenauigkeit wird weiter verbessert, und entsprechende Teile sind leichter zu reinigen. Als Beschichtung eignet sich besonders PTFE (Anspruch 20).

Ist die Vorrichtung analog Anspruch 8 eine Becherdosiervorrichtung, und enthält das bewegliche Teil die Becher (Anspruch 9), so wird in technisch einfacher Weise eine extrem schnell dosierende Vorrichtung erzielt. Die Becher werden durch den Druck des zu dosierenden Produkts, welches sich im Vorratsbehälter befindet, gefüllt. Da das bewegliche Teil eine sehr geringe Massenträgheit aufweist, können die Becher entsprechend schnell zwischen einer Füllposition und einer Entleerungsposition hin und her bewegt werden.

Die Dosiergeschwindigkeit hängt nur von der Trägheit des Produkts und der Geschwindigkeit des beweglichen Teils ab, wenn analog Anspruch 10 oberhalb des Teils eine den Vorratsbehälter bodenseitig begrenzende, mindestens einen Becher abdeckende Abdeckvorrichtung vorgesehen ist, und unterhalb des Teils und der Abdeckeinrichtung ein Becherauslaß vorgesehen ist. Mit einer derartigen Vorrichtung werden maximale Dosierleistungen erreicht.

Ist das bewegliche Teil um eine Mittelachse drehbar (Anspruch 11), so kann in einem zylinderförmigen Teil eine Vielzahl von Bechern vorgesehen werden. Dies hat bei einer Vorrichtung gemäß Anspruch 3 den Vorteil, daß die zur Verfügung stehende Zeit zum Füllen eines Bechers relativ hoch ist. Ist das bewegliche Teil gerade verschiebbar (Anspruch 12), so ist die Vorrichtung in kostengünstiger Weise vereinfacht.

Eine sofortige Umstellung von einem Dosiervolumen auf ein geändertes Dosiervolumen ist möglich, wenn analog Anspruch 13 die Vorrichtung eine Schneckendosiervorrichtung ist, und das drehbare Teil eine in einem Schneckenrohr drehbare Dosierschnecke ist. Die Anzahl der Umdrehungen der Dosierschnecke bei einem Dosiervorgang bestimmt das dosierte Volumen. Durch eine Änderung der Anzahl der Umdrehungen wird das von der Vorrichtung portionsweise gespendete Produktvolumen geändert. Infolge des geringen Massenträgheitsmoments der Magnesiumlegierung kann die Dosierschnecke wesentlich schneller beschleunigt und betrieben werden als eine herkömmliche Dosierschnecke.

Dadurch erfolgt der Dosiervorgang ebenfalls wesentlich schneller. Darüber hinaus wird noch die Dosiergenauigkeit erhöht, da eine Dosierschnecke mit geringerem Massenträgheitsmoment genauer zum Stillstand kommt als eine Dosierschnecke mit höherem Massenträgheitsmoment. Auch können wegen der höheren erreichbaren Drehzahl Dosierschnecken mit deutlich geringerem Anstieg oder deutlich geringerem Durchmesser eingesetzt werden, wodurch die Dosiergenauigkeit noch weiter gesteigert werden kann. Die hohe Steifigkeit der Magnesiumlegierung erlaubt zudem einen derart passgenauen Einsatz der Dosierschnecke im Schneckenrohr, daß auch Produkte mit relativ ungünstigen Fließeigenschaften gut dosiert werden können.

Die Herstellung des Teils aus einer Magnesiumlegierung erfolgt in kostengünstiger Weise als Gußteil (Anspruch 16).

Mit einem elektromagnetischen Linearantrieb (Linearmotor) als Antrieb für das bewegliche Teil (Anspruch 21) können Beschleunigungen des Teils bis zum Zwanzigfachen der Erdbeschleunigung realisiert werden. Infolge des geringen Trägheitsmoments der Magnesiumlegierung können auch relativ leistungsschwache Linearmotoren eingesetzt werden, so daß auch eine kostengünstige technische Realisierung des Antriebs erreicht ist.

Im folgenden wird die Erfindung an Hand von Ausführungsbeispiele darstellenden Figuren näher beschrieben. Es zeigt:

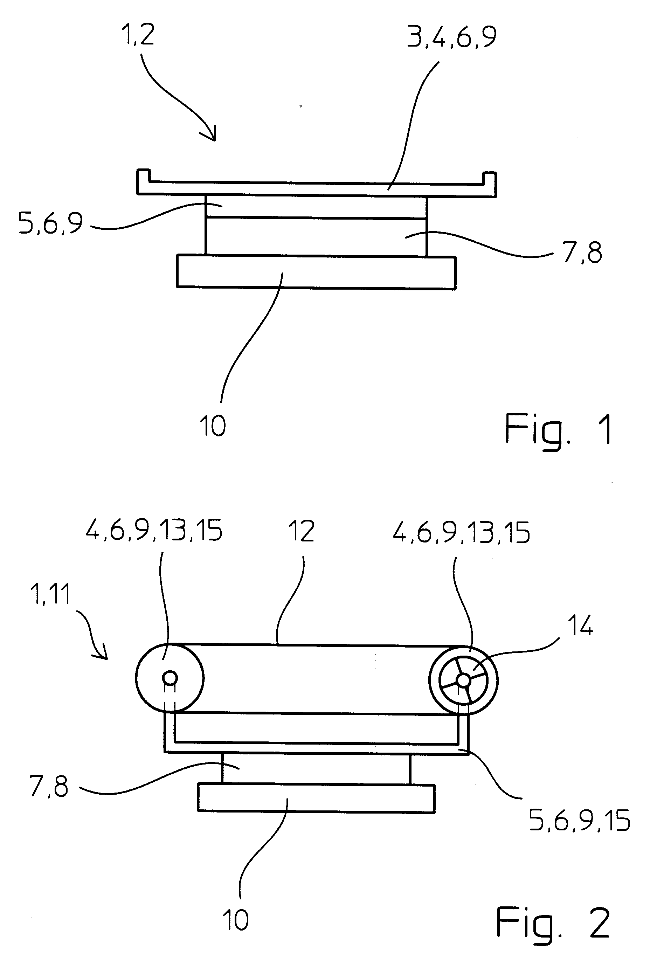

- Figur 1: in einer Seitenansicht eine Vorrichtung zum gravimetrischen Bestimmen einer Masse, mit einer Wägeschale als Einrichtung zum Aufnehmen einer Masse, einem Träger für die Wägeschale, und einer Wägezelle, wobei die Einrichtung und der Träger aus einer Magnesiumlegierung bestehen;
- Figur 2: in einer Seitenansicht eine Bandwaage, bei der ein geschlossenes Band um zwei Rollen umläuft, eine Rolle mittels eines Antriebs angetrieben ist, das Band, die Rollen, der Antrieb und ein Träger eine Wägezelle belasten, und die Rollen und der Träger aus einer Magnesiumlegierung bestehen, sowie

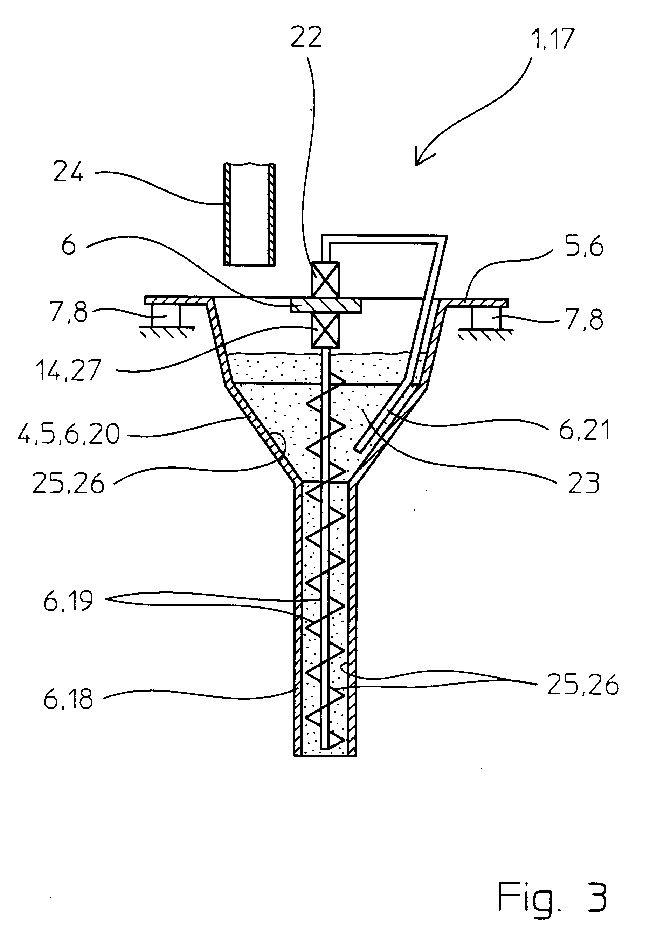

- Figur 3: in einem Vertikalschnitt eine Schneckenwaage, mit einer in einem Schneckenrohr angeordneten Dosierschnecke, mit einem Vorratsbehälter als Einrichtung und als Träger, mit einem Rührwerk und einem Antrieb für das Rührwerk, mit einer Produktmasse, und mit zwei Wägezellen als Meßeinrichtung, wobei der Vorratsbehälter, die Produktmasse, die Dosierschnecke, das Schneckenrohr, das Rührwerk und die Antriebe die Meßeinrichtung belasten;

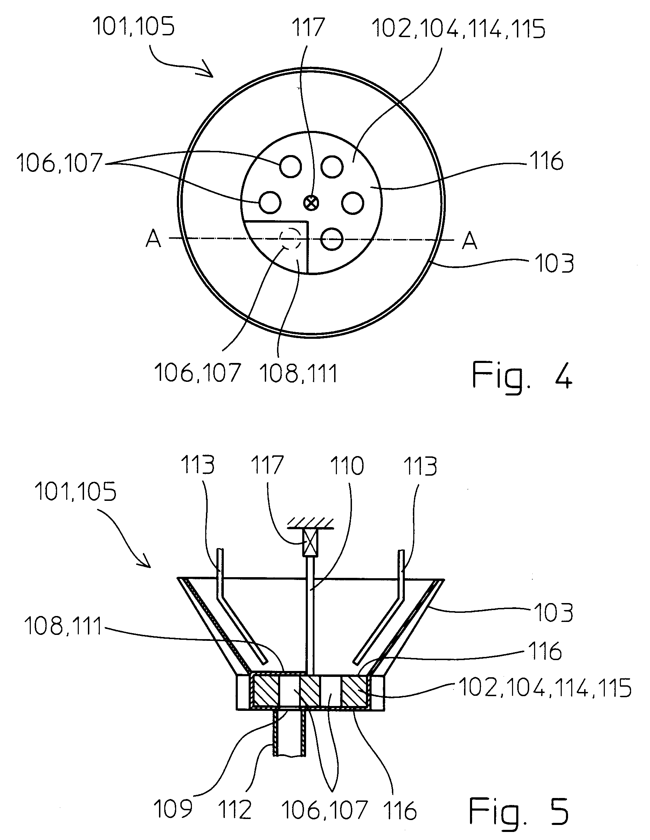

- Figur 4: in einer Draufsicht eine Becherdosier-Vorrichtung zum volumetrischen Dosieren eines fließfähigen Produkts, wobei das Produkt mittels eines drehbaren, aus einer Magnesiumlegierung bestehenden, beweglichen Teils aus einem Vorratsbehälter ausgetragen wird, einer den Vorratsbehälter bodenseitig begrenzenden, oberhalb eines von sechs Bechern des Teils angeordneter Abdeckeinrichtung, einem unterhalb der Abdeckeinrichtung und unterhalb des Teils angeordneten Becherauslaß, und einem Antrieb zum Drehen des beweglichen Teils;
- Figur 5: in einem Schnitt entlang A-A der Figur 4 die Vorrichtung der Figur 4, jedoch zusätzlich mit zwei Rührstangen eines Rührwerkes, zum Rühren von Produkt im Vorratsbehälter;

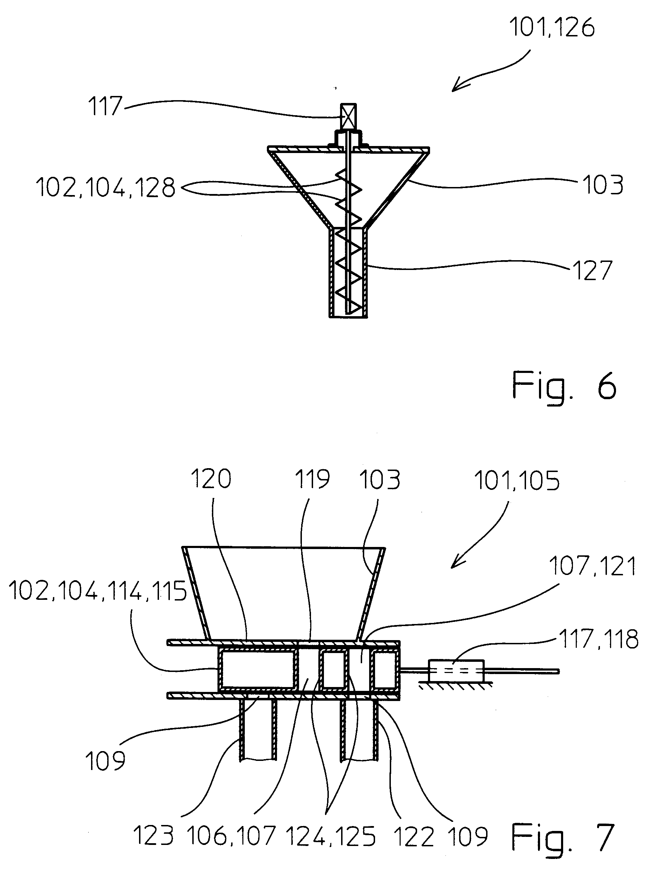

- Figur 6: in einem Vertikalschnitt eine Schneckendosiervorrichtung, deren in einem Schneckenrohr befindliche Dosierschnecke aus einer Magnesiumlegierung besteht, und die mittels eines Antriebs gedreht wird, um fließfähiges Produkt aus einem Vorratsbehälter auszutragen, sowie
- Figur 7: in einem Vertikalschnitt eine Becherdosiervorrichtung, dessen bewegliches Teil aus einer Magnesiumlegierung besteht, und in dem zwei Becher ausgespart sind, mit einem Linearmotor als Antrieb für das bewegliche Teil, und mit zwei Füllrohren, in die abwechselnd eine dosierte Produktportion abgegeben wird.

Eine Vorrichtung 1 zum gravimetrischen Bestimmen einer Masse ist als Waage 2 mit einer Wägeschale 3 ausgestattet (Figur 1). Die Wägeschale 3 dient als Einrichtung 4 zur Aufnahme einer zu wägenden, elektrostatisch leicht aufladbaren, pulverförmigen Masse und wird von einem Träger 5 fixiert. Die Einrichtung 4 und der Träger 5 bestehen aus einer Magnesiumlegierung 6 und haben ein sehr geringes Massenträgheitsmoment und eine große elektrische Leitfähigkeit. Der Träger 5 und die Einrichtung 4 belasten eine als Wägezelle 7 ausgestaltete Meßeinrichtung 8. Die Waage 2 hat eine hohe Genauigkeit, da die Einrichtung 4 und der Träger 5 relativ leicht sind. Die Wägezeit ist wegen des geringen Massenträgheitsmoments von Einrichtung 4 und Träger 5 sehr gering. Wegen der großen Steifigkeit der Magnesiumlegierung 6 ist die Einrichtung 4 relativ dünn ausgestaltet. Die Genauigkeit einer Wägung wird durch elektrische Ladung in der Masse nicht beeinflußt, da ein zuverlässiger Ladungsausgleich in der Einrichtung 4 erfolgt. Es wird Mg Al9 Zn1 9 als Magnesiumlegierung 6 eingesetzt. Die Waage 2 hat einen Fuß 10. Die Wägeschale 3 ist eloxiert und weist somit eine chemisch inerte Beschichtung 16 auf.

Beim Ausführungsbeispiel der Figur 2 ist die Vorrichtung 1 als Bandwaage 11 ausgestaltet Ein geschlossenes Band 12 ist ein Zusatz zur Einrichtung 4 und läuft um zwei Rollen 13 der Einrichtung 4 um. Eine Rolle 13 ist mittels eines Antriebs 14 angetrieben. Als Meßeinrichtung 8 ist eine auf einem Fuß 10 angeordnete Wägezelle 7 vorgesehen. Die Rollen 13 und ein Träger 5 bestehen aus der Magnesiumlegierung 6 Mg Al9 Zn1 9 und sind relativ leicht. Das Band 12 kann aus Kunststoff bestehen. Vom Band 12 eventuell erzeugte Ladung werden von der Magnesiumlegierung 6 ausgeglichen und stören nicht die Funktion der Meßeinrichtung 8. Infolge der geringen Masse von Träger 5 und Rollen 13 ist die Wägegenauigkeit relativ hoch. Die Einrichtung 4 und der Träger 5 bestehen aus Gußteilen 15.

Beim Ausführungsbeispiel der Figur 3 ist die Vorrichtung 1 eine Schneckenwaage 17. In einem Schneckenrohr 18 ist eine Dosierschnecke 19 drehbar angeordnet. Ein Vorratsbehälter 20 dient als Einrichtung 4 und als Träger 5. Zwei Wägezellen 7 bilden eine Meßeinrichtung 8. Es könnten auch vier Wägezellen, um jeweils 90 Grad zueinander versetzt, genutzt werden. Ein Rührwerk 21 wird von einem Antrieb 22 gedreht und dient einer Homogenisierung der im Vorratsbehälter 20 befindlichen Produktmasse 23. Der Vorratsbehälter 20, die Dosierschnecke 19, das Schneckenrohr 18, die Antriebe 14, 22, das Rührwerk 21 und die Produktmasse 23 belasten die Meßeinrichtung 8.

Eine aus einem Zuleitungsrohr 24 von einem Silo der Vorrichtung 1 portionsweise zugeführte Produktmasse 23 wird von der Meßeinrichtung 8 gemessen und das Meßsignal wird einer Auswerteelektronik zugeführt. Durch Betätigung des Antriebs 14 werden sodann durch jeweils einen kurzzeitigen Betrieb der Dosierschnecke 19 einzelne Produktportionen unten aus dem Schneckenrohr 18 gespendet. Jeder Dosiervorgang wird durch ein entsprechendes Signal der Meßeinrichtung 8, wonach die gesamte, von der Meßeinrichtung 8 gemessene Masse um die Masse einer Produktportion abgenommen hat, beendet.

Der Vorratsbehälter 20, die Dosierschnecke 19, das Schneckenrohr 18 und das Rührwerk 21 bestehen aus einer Magnesiumlegierung 6 und sind relativ leicht, wodurch die Meßgenauigkeit relativ groß ist. Das Innere des Vorratsbehälters 29 und des Schneckenrohres 18, sowie die Dosierschnecke 19 sind zum Zweck eine besseren Reinigung mit einer antiadhäsiven Beschichtung 25, die PTFE 26 enthält, versehen.

Als Antrieb 14 für die Dosierschnecke 19 ist ein elektromagnetischer Linearantrieb 27 vorgesehen, um einen extrem schnellen Dosiervorgang zu erreichen. Wegen des geringen Massenträgheitsmoments der Dosierschnecke 19 kann der Linearantrieb 27 relativ klein, leistungsarm und damit kostengünstig und leicht ausgestaltet sein.

Die Schneckenwaage 17 ist wegen ihrer geringen Masse sehr meßgenau, sowie wegen ihres Linearantriebs 27 und des geringen Trägheitsmoments der Dosierschnecke 19 extrem schnell. Wegen der überragenden Leitfähigkeit der Magnesiumlegierung 6 kommen die Meßeinrichtung 8 beeinflussende Ladungen, selbst bei elektrostatisch sehr leicht aufladbarer Produktmasse 23, nicht vor.

Bei einer Vorrichtung 101 zum volumetrischen Dosieren eines fließfähigen Produkts, z. B. eines Pulvers, ist ein bewegliches, das Produkt dosierendes Teil 102 etc. vorgesehen, um das Produkt aus einem Vorratsbehälter 103 auszutragen (Figur 4, Figur 5). Ein Antrieb 117 treibt das bewegliche Teil 102 an. Das bewegliche Teil besteht aus einer Magnesiumlegierung 104. Die Vorrichtung 101 ist eine Becherdosiervorrichtung 105. Das bewegliche Teil 102 enthält sechs Becher 106 in Form von Aussparungen 107 im beweglichen Teil 102. Oberhalb des Teils 102 ist eine den Vorratsbehälter 103 bodenseitig begrenzende, einen Becher 106 abdeckende Abdeckeinrichtung 108 in Form einer Abdeckplatte 111 angebracht. Bei einer Drehung des beweglichen Teils 102 um seine Mittelachse 110 gelangen die Becher 106 nacheinander unter die passgenau jeweils einen Becher 106 abschließende Abdeckplatte 111. Während die fünf nicht unter der Abdeckplatte 111 gelegenen Becher 106 durch das im Vorratsbehälter 103 befindliche Produkt gefüllt sind, wird aus dem unter der Abdeckplatte 111 gelegenen Becher 106 eine genau dosierte Produktportion durch einen Becherauslaß 109 in ein Füllrohr 112 einer vertikalen Schlauchbeutelmaschine gespendet. Umlaufende Rührstangen 113 eines Rührwerkes sorgen im Vorratsbehälter 103 für eine möglichst gleichmäßige Dichteverteilung im Produkt.

Wegen der geringen Masse des aus Mg Al9 Zn1 14 bestehenden Teils 102 und dessen großer Steifigkeit sind eine extrem große Beschleunigung und eine extrem große Verzögerung des Teils 102 möglich. Eine Produktabgabe in das Füllrohr 112 erfolgt bei kurzzeitigem Stillstand des Teils 102. Die große Härte der Magnesiumlegierung 104 bewahrt das Teil 102, welches ein Gußteil 115 ist, vor einer vorzeitigen Abnutzung. Infolge der hohen Steifigkeit des Teils 102 ist der lichte Abstand des Teils 102 zur Abdeckplatte 111 minimiert. Ein Flattern des Teils 102 käme auch bei weiter reduzierter Masse des Teils 102 nicht vor. Mittels einer weiteren Massenreduzierung, z.B. durch Hohlräume im Teil 102, wäre das Trägheitsmoment des Teils 102 weiter reduziert, und noch größere Beschleunigungen wären erzielbar.

Die Magnesiumlegierung 104 wurde eloxiert und weist somit eine chemisch inerte Beschichtung 116 auf, die die Magnesiumlegierung 104 sowohl vor einer Reaktion mit dem Produkt als auch vor Korrosion bewahrt. Durch ein extrem schnelles Anfahren und Abbremsen des Teils 102 werden extrem hohe Dosierleistungen erzielt.

Beim Ausführungsbeispiel der Figur 7 ist die Vorrichtung 101 ebenfalls eine Becherdosiervorrichtung 105. Das bewegliche Teil 102 ist gerade verschiebbar. Als Antrieb 117 für das bewegliche Teil 102 ist ein elektromagnetischer Linearantrieb 118 vorgesehen, der Beschleunigungswerte bis zum 20-fachen der Erdbeschleunigung erlaubt. Dadurch ist eine sehr hohe Dosierleistung möglich, die quasi nur durch die Massenträgheit des Produkts begrenzt ist. Durch einen Durchlaß 119 im Boden 120 eines Vorratsbehälters 103 gelangt Produkt in einen Becher 106, währenddessen ein anderer Becher 121 gerade durch einen Becherauslaß 109 in ein Füllrohr 122 entleert wird. Nach einem Verschieben des beweglichen Teils 102 nach links wird sodann der Becher 121 durch den Durchlaß 119 befüllt, währenddessen das abgemessene Produktvolumen des Bechers 106 in das Füllrohr 123 entleert wird.

Die Magnesiumlegierung 104 des Teils 102 ist in den Bechern 106, 121 mit PTFE 25 als einer antiadhäsiven Beschichtung 124 versehen, um Produktanhaftungen in den Bechern 106, 121 und damit verbundene Dosiergenauigkeiten zu vermeiden.

Die Vorrichtung 101 kann auch eine Schneckendosiervorrichtung 126 sein (Figur 6). Das bewegliche Teil 102 ist eine in einem Schneckenrohr 127 befindliche, mittels eines Antriebs 117 drehbare Dosierschnecke 128. Infolge des geringen Trägheitsmomentes der aus einer Magnesiumlegierung 104 gefertigten Dosierschnecke 128 ist diese extrem schnell beschleunigbar und verzögerbar. Dazwischen kann sie extrem schnell betrieben werden, so daß eine durch eine feste Anzahl von Umdrehungen vorgegebene Produktportion sehr schnell aus einem Vorratsbehälter 103 ausgebracht werden kann. Die Dosiergenauigkeit ist dabei sehr hoch, da die Dosierschnecke 128 wegen ihres geringen Trägheitsmoments winkelgenau gestoppt werden kann. Bei Einsatz eines Linearmotors als Antrieb 117 kann diese Winkelgenauigkeit noch verbessert werden, da ein Linearmotor sehr ortsgenaue Bewegungen bewirkt. Die Härte und Steifigkeit der Magnesiumlegierung 104 erlauben eine lange Einsatzdauer der Dosierschnecke 128 ohne nennenswerten Verschleiß.
- 1: Vorrichtung
- 2: Waage
- 3: Wägeschale
- 4: Einrichtung
- 5: Träger
- 6: Magnesiumlegierung
- 7: Wägezelle
- 8: Meßeinrichtung
- 9: Mg Al9 Zn1
- 10: Fuß
- 11: Bandwaage
- 12: Band
- 13: Rolle
- 14: Antrieb
- 15: Gußteil
- 16: Beschichtung
- 17: Schneckenwaage
- 18: Schneckenrohr
- 19: Dosierschnecke
- 20: Vorratsbehälter
- 21: Rührwerk
- 22: Antrieb
- 23: Produktmasse
- 24: Zuleitungsrohr
- 25: Beschichtung
- 26: PTFE
- 27: elektromagnetischer Linearantrieb
- 101: Vorrichtung
- 102: bewegliches Teil
- 103: Vorratsbehälter
- 104: Magnesiumlegierung
- 105: Becherdosiervorrichtung
- 106: Becher
- 107: Aussparung
- 108: Abdeckeinrichtung
- 109: Becherauslaß
- 110: Mittelachse
- 111: Abdeckplatte
- 112: Füllrohr
- 113: Rührstange
- 114: Mg Al9 Zn1
- 115: Gußteil
- 116: Beschichtung
- 117: Antrieb
- 118: elektromagnetischer Linearantrieb
- 119: Durchlaß
- 120: Boden
- 121: Becher
- 122, 123: Füllrohr
- 124: Beschichtung
- 125: PTFE
- 126: Schneckendosiervorrichtung
- 127: Schneckenrohr
- 128: Dosierschnecke

## Patentansprüche

1. Vorrichtung zum Bestimmen der Masse eines Produkts, mit einer Masse aufnehmenden Einrichtung, einem die Einrichtung fixierenden Träger, und einer die Masse, die Einrichtung und den Träger wägenden Meßeinrichtung, dadurch gekennzeichnet, daß die Einrichtung (4) und der Träger (5) aus einer Magnesiumlegierung (6) bestehen.

2. Vorrichtung nach Anspruch 1, dadurch gekennzeichnet, daß die Vorrichtung (1) eine mit einer Wägeschale (3) als Einrichtung (4) ausgestattete Waage (2) ist, und daß als Meßeinrichtung (8) eine Wägezelle (7) vorgesehen ist.

3. Vorrichtung nach Anspruch 1, dadurch gekennzeichnet, daß die Vorrichtung (1) eine Bandwaage (11) ist, bei der ein geschlossenes Band (12) als Zusatz zur Einrichtung (4) um zwei Rollen (13) der Einrichtung (4) umläuft, wobei eine Rolle (13) oder das Band (12) mittels eines Antriebs (14) angetrieben ist, und daß als Meßeinrichtung (8) eine Wägezelle (7) vorgesehen ist.

4. Vorrichtung nach Anspruch 1, dadurch gekennzeichnet, daß die Vorrichtung (1) eine Schneckenwaage (17) ist, mit einer in einem Schneckenrohr (18) angeordneten Dosierschnecke (19), mit einem Vorratsbehälter (20) als Einrichtung (4) und als Träger (5), sowie mit mindestens einer Wägezelle (7) als Meßeinrichtung (8), wobei der Vorratsbehälter (20), die Dosierschnecke (19), das Schneckenrohr (18) und ein Antrieb (14) für die Dosierschnecke (19) die Meßeinrichtung (8) belasten.

5. Vorrichtung nach Anspruch 4, dadurch gekennzeichnet, daß die Meßeinrichtung (8) zusätzlich von einem Rührwerk (21) und einem Antrieb (22) für das Rührwerk (21) belastet wird.

6. Vorrichtung nach Anspruch 1, Anspruch 2, Anspruch 3 oder Anspruch 4, dadurch gekennzeichnet, daß als Magnesiumlegierung (6) Mg Al9 Zn1 (9) oder Mg Al8 Zn1 vorgesehen ist.

7. Vorrichtung nach Anspruch 1 oder Anspruch 6, dadurch gekennzeichnet, daß die Einrichtung (4) und/oder der Träger (5) aus mindestens einem Gußteil (15) bestehen.

8. Vorrichtung zum Bestimmen einer Masse eines Produkts, mit einem beweglichen, das Produkt dosierendem Teil, wobei das Produkt vom beweglichen Teil aus einem Vorratsbehälter ausgetragen wird, und ein Antrieb das bewegliche Teil antreibt, dadurch gekennzeichnet, daß das bewegliche Teil (102) aus einer Magnesiumlegierung (104) besteht.

9. Vorrichtung nach Anspruch 8, dadurch gekennzeichnet, daß die Vorrichtung (101) eine Becherdosiervorrichtung (105) ist, und daß das bewegliche Teil (102) die Becher (106, 121) enthält.

10. Vorrichtung nach Anspruch 9, dadurch gekennzeichnet, daß oberhalb des Teils (102) eine den Vorratsbehälter (103) bodenseitig begrenzende, mindestens einen Becher (106) abdeckende Abdeckeinrichtung (108) vorgesehen ist, und daß unterhalb des Teils (102) und der Abdeckeinrichtung (108) ein Becherauslaß (109) vorgesehen ist.

11. Vorrichtung nach Anspruch 9 oder Anspruch 10, dadurch gekennzeichnet, daß das bewegliche Teil (102) um eine Mittelachse (110) drehbar ist.

12. Vorrichtung nach Anspruch 9 oder Anspruch 10, dadurch gekennzeichnet, daß das bewegliche Teil (102) gerade verschiebbar ist.

13. Vorrichtung nach Anspruch 8, dadurch gekennzeichnet, daß die Vorrichtung (101) eine Schneckendosiervorrichtung (126) ist, und daß das bewegliche Teil (102) eine in einem Schneckenrohr (127) befindliche, drehbare Dosierschnecke (128) ist.

14. Vorrichtung nach Anspruch 1, Anspruch 2, Anspruch 4, Anspruch 8, Anspruch 9 oder Anspruch 13, dadurch gekennzeichnet, daß als Magnesiumlegierung Mg Ag3 Se2 Zr1 vorgesehen ist.

15. Vorrichtung nach Anspruch 8, Anspruch 9 oder Anspruch 13, dadurch gekennzeichnet, daß als Magnesiumlegierung (104) Mg Al9 Zn1 (114) vorgesehen ist.

16. Vorrichtung nach Anspruch 8, Anspruch 14 oder Anspruch 15, dadurch gekennzeichnet, daß das Teil (102) ein Gußteil (115) ist.

17. Vorrichtung nach Anspruch 1, Anspruch 8, Anspruch 14, Anspruch 15 oder Anspruch 16, dadurch gekennzeichnet, daß die Magnesiumlegierung (6, 104) mit einer Beschichtung (116) versehen ist, und die Beschichtung (116) chemisch inert ist.

18. Vorrichtung nach Anspruch 8 oder Anspruch 17, dadurch gekennzeichnet, daß die Magnesiumlegierung (4) eloxiert ist.

19. Vorrichtung nach Anspruch 1, Anspruch 2, Anspruch 3, Anspruch 4, Anspruch 14, Anspruch 15 oder Anspruch 16, dadurch gekennzeichnet, daß die Magnesiumlegierung (6, 2) mit einer Beschichtung (25, 124) versehen ist, und die Beschichtung (25, 124) antiadhäsiv ist.

20. Vorrichtung nach Anspruch 19, dadurch gekennzeichnet, daß die Beschichtung (25, 124) PTFE (26, 125) enthält.

21. Vorrichtung nach Anspruch 4, Anspruch 5, Anspruch 8, Anspruch 14, Anspruch 15 oder Anspruch 16, dadurch gekennzeichnet, daß als Antrieb (14, 117) ein elektromagnetischer Linearantrieb (27, 118) vorgesehen ist.
